(19) **Europäisches Patentamt / European Patent Office / Office européen des brevets**

(11) **EP 4 261 750 B1**

(12) **EUROPEAN PATENT SPECIFICATION**

(45) Date of publication and mention
of the grant of the patent:
**25.06.2025 Bulletin 2025/26**

(51) International Patent Classification (IPC):
**G06N 3/08** *(2023.01)* **G06N 7/01** *(2023.01)*
**G06N 3/045** *(2023.01)* **G06N 3/0475** *(2023.01)*
**G06N 3/047** *(2023.01)* **G06N 3/096** *(2023.01)*

(21) Application number: **22200499.6**

(22) Date of filing: **10.10.2022**

(52) Cooperative Patent Classification (CPC):
**G06N 3/08; G06N 3/045; G06N 3/047;
G06N 3/0475; G06N 3/096; G06N 7/01**

(54) **METHOD FOR AUGMENTING DATA AND SYSTEM THEREOF**

VERFAHREN ZUR DATENVERSTÄRKUNG UND SYSTEM DAFÜR

PROCÉDÉ D'AUGMENTATION DE DONNÉES ET SYSTÈME ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.04.2022 KR 20220046106**

(43) Date of publication of application:
**18.10.2023 Bulletin 2023/42**

(73) Proprietors:
• **Samsung SDS Co., Ltd.**
**Songpa-gu, Seoul (KR)**
• **Industry-Academic Cooperation Foundation**
**Yonsei University**
**Seoul (KR)**

(72) Inventors:
• **KIM, Min Jung**
**Seoul (KR)**
• **PARK, Se Won**
**Seoul (KR)**
• **PARK, No Seong**
**Seoul (KR)**
• **KIM, Ja Young**
**Seoul (KR)**
• **LEE, Chae Jeong**
**Incheon (KR)**
• **SHIN, Yeh Jin**
**Gunpo-si (KR)**
• **LEE, Chang Joon**
**Seoul (KR)**
• **CHO, Ji Hoon**
**Seoul (KR)**

(74) Representative: **Glawe, Delfs, Moll
Partnerschaft mbB
Hopfenmarkt 33
20457 Hamburg (DE)**

(56) References cited:
• **ALEXIA JOLICOEUR-MARTINEAU ET AL: "Gotta Go Fast When Generating Data with Score-Based Models", ARXIV.ORG, CORNELL UNIVERSITY LIBRARY, 201 OLIN LIBRARY CORNELL UNIVERSITY ITHACA, NY 14853, 28 May 2021 (2021-05-28), XP081971284**
• **YANG SONG ET AL: "Improved Techniques for Training Score-Based Generative Models", ARXIV.ORG, CORNELL UNIVERSITY LIBRARY, 201 OLIN LIBRARY CORNELL UNIVERSITY ITHACA, NY 14853, 16 June 2020 (2020-06-16), XP081697077**
• **LIU LEI ET AL: "SAR Target Classification with CycleGAN Transferred Simulated Samples", IGARSS 2018 - 2018 IEEE INTERNATIONAL GEOSCIENCE AND REMOTE SENSING SYMPOSIUM, IEEE, 22 July 2018 (2018-07-22), pages 4411 - 4414, XP033437085, DOI: 10.1109/ IGARSS.2018.8517866**

EP 4 261 750 B1

**Description**

BACKGROUND

**1. Technical Field**

The present disclosure relates to a method for augmenting data and a system thereof, and more particularly, to a method for augmenting data designed to solve class imbalance issues present in an original dataset, and a system thereof.

**2. Description of the Related Art**

Class imbalances or data imbalances mean that the number of samples belonging to a particular class in a learning (training) dataset differs significantly from those of other classes, and the class imbalance exists in the majority of datasets collected in the real world. For instance, in datasets collected for anomaly detection (e.g., disease presence determination, anomaly transaction detection, etc.), there are usually many more samples of normal classes than samples of abnormal classes. Since the class imbalance in a learning dataset reduces the performance of classification models due to biased learning, it is recognized as an important issue in the field of machine learning.

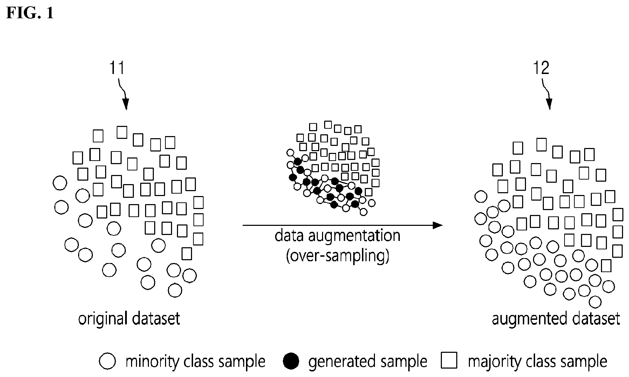

To solve the aforementioned class imbalance issue, a variety of data augmentation techniques have been proposed so far, and a representative example of the proposed technique is a synthetic minority over-sampling technique (SMOTE). As illustrated in FIG. 1, the SMOTE is a technique whereby data of an original dataset 11 is augmented by over-sampling a minority class (see an augmented dataset 12).

However, since a SMOTE-based data augmentation technique simply generates fake samples using samples from nearby minority classes, it may overlap samples of a majority class or generate similar samples. Furthermore, there is a disadvantage in that the generation area of a fake sample in a data space is limited to the area between minority classes, and thus, it is difficult to apply the technique to a high-dimensional dataset.

ALEXIA JOLICOEUR-MARTINEAU ET AL: "Gotta Go Fast When Generating Data with Score-Based Models", and YANG SONG ET AL: "Improved Techniques for Training Score-Based Generative Models", ARXIV.ORG, disclose generative models to generate image samples.

SUMMARY

At least one of the above-noted objects is solved by the subject matter of the independent claims. Preferable embodiments are described in the dependent claims.

[ADVANTAGEOUS EFFECTS]

According to some embodiments of the present disclosure, a dataset of a certain class may be augmented using a score-based generative model. For instance, the dataset of a minority class may be augmented in an original dataset. In that case, since the class imbalance issue present in the original dataset is solved, the performance of the classification model can ultimately be improved.

In addition, a fake sample of a first class may be generated using a noisy sample of a second class and a score prediction model of a first class. For instance, a fake sample of a minority class may be generated using a noisy sample of a majority class and a score prediction model of a minority class. In that case, the fake sample can be generated in an area between two classes (i.e., an area between two classes in a data space), and a generation location (or characteristic) of the fake sample can be easily controlled through the class selection of the score prediction model and the noisy sample. Furthermore, the effect of generating a fake sample in various areas in the data space can be achieved.

Furthermore, the strong occurrence of scores (i.e., gradient vectors) that indicate an area where samples of several classes are concentrated (mixed) can be avoided through additional learning of the score prediction model. Accordingly, it is possible to prevent a fake sample from being generated in an area where samples of several classes are concentrated (mixed), and as a result, a fake sample with characteristics that are well distinguished from other classes may be generated. For instance, a fake sample of the minority class with characteristics that are well distinguished from samples of the majority class may be generated.

In addition, the learning of distributions and the score prediction can be accurately performed on high-dimensional samples by using a neural network-based score prediction model. Accordingly, a high-quality fake sample can also be generated for a high-dimensional sample (data), for example, tabular data with multiple fields.

The effects of the technical idea of the present disclosure are not restricted to those set forth herein, and other unmentioned technical effects will be clearly understood by one of ordinary skill in the art to which the present disclosure pertains by referencing the detailed description of the present disclosure given below.

BRIEF DESCRIPTION OF THE DRAWINGS

The above and other aspects and features of the present disclosure will become more apparent by describing in detail exemplary embodiments thereof with reference to the attached drawings, in which:

FIG. 1 is an exemplary view describing a SMOTE technique and an issue thereof;

FIG. 2 is an exemplary view describing a data augmentation system according to some embodiments of the present disclosure;

FIG. 3 is an exemplary view describing a concept of a score that may be referenced in some embodiments of the present disclosure;

FIG. 4 is an exemplary view describing a process of generating a noisy sample based on a stochastic differential equation that may be referenced in some embodiments of the present disclosure;

FIGS. 5 and 6 are exemplary views describing a score prediction model that may be referenced in some embodiments of the present disclosure;

FIG. 7 is an exemplary flowchart illustrating a method for augmenting data according to a first embodiment of the present disclosure;

FIG. 8 is an exemplary view further describing the method for augmenting data according to a first embodiment of the present disclosure;

FIG. 9 is an exemplary view describing a fake sample generation step illustrated in FIG. 7;

FIG. 10 is an exemplary flowchart illustrating the method for augmenting data according to a second non-claimed embodiment of the present disclosure;

FIGS. 11 and 12 are exemplary flowcharts illustrating the method for augmenting data according to a third non-claimed embodiment of the present disclosure;

FIG. 13 is an exemplary diagram describing an effect of additional learning in the method for augmenting data according to the third embodiment of the present disclosure;

FIG. 14 illustrates a comparative experiment result of the method for augmenting data according to some embodiments of the present disclosure and the SMOTE;

FIG. 15 is an exemplary view illustrating the method for augmenting data according to a fourth embodiment of the present disclosure; and

FIG. 16 illustrates an exemplary computing device capable of implementing a data augmentation system according to some embodiments of the present disclosure.

DETAILED DESCRIPTION OF THE EMBODIMENT

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Prior to the description of various embodiments of the present disclosure, the terms used in the following embodiments will be clearly described.

In the following embodiments, a "sample" may refer to one or a plurality of individual data constituting a dataset. In the pertinent technical field, the "sample" can be used interchangeably with terms such as an example, an instance, and observation.

In the following embodiments, an "original dataset" may refer to a dataset before performing a data augmentation process. When the data augmentation process is repeatedly performed, the original dataset may mean a dataset just before performing a current data augmentation process. In some cases, the original dataset can be used interchangeably with terms such as an existing dataset.

In the following embodiments, a "noisy sample" may refer to a sample to which noise is added. For example, as noise is added to an original sample, the original sample may be transformed into a noisy sample. Furthermore, when noise is continuously added to the original sample, the original sample will be transformed so that it is almost similar or identical to the noise sample, and accordingly, the noisy sample may contain a noise sample. In some cases, the noisy sample can be used interchangeably with terms such as a transformed sample.

In the following embodiments, a "de-noised sample" may refer to a sample in which a noise cancellation process has been performed. Any scheme may be used as a manner of removing noise.

In the following embodiments, a "fake sample" may refer to a sample generated by a generative model. In the pertinent technical field, the "fake sample" can be used interchangeably with terms such as a synthetic sample, a virtual sample, and a fake sample.

Hereinafter, embodiments of the present disclosure will be described with reference to the attached drawings.

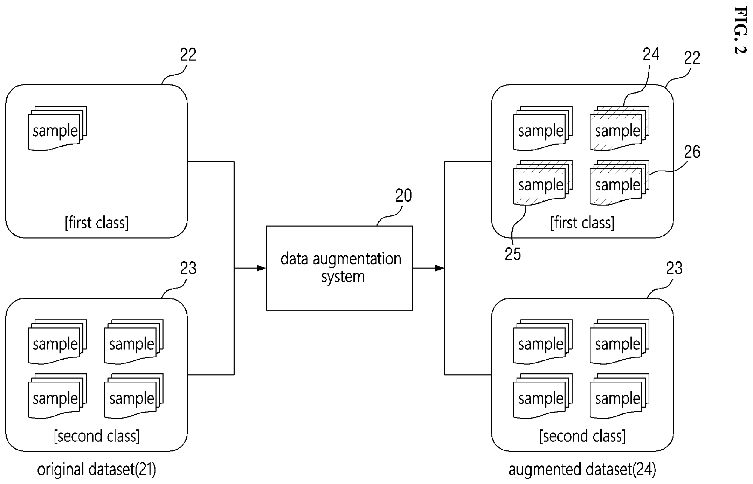

FIG. 2 is an exemplary view describing a data augmentation system according to some embodiments of the present disclosure.

As illustrated in FIG. 2, a data augmentation system 20 is a system that performs data augmentation on a given original dataset 21. Each sample constituting the original data set 21 is an image. Specifically, the data augmentation system 20 may augment a dataset of at least one class belonging to the given original dataset 21. For example, the data augmentation system 20 may augment a dataset 22 of a first class by generating fake samples 24 to 26 of the first class (e.g., a minority class) belonging to the original dataset 21.

Although FIG. 2 illustrates a case in which the original dataset 21 is formed of two classes, the scope of the present disclosure is not limited thereto, and the original dataset 21 may be formed of three or more classes.

As illustrated in the drawing, typically, a first class may be a minority class, and a second class may be majority classes. In other words, in the original dataset 21, the number of samples of the first class may be fewer than that of the second class. In that case, the data augmentation system 20 can solve a class imbalance issue present in the original dataset (e.g., 21) by augmenting the dataset 22 of the minority class, and improve the performance of a classification model by learning the classification model using an augmented dataset 24.

As claimed, the original dataset 21 is a dataset in an abnormality detection field, the first class is an abnormal class and the second class is a normal class. In that case, the data augmentation system 20 may improve the performance of an abnormality detection model by augmenting the dataset 22 of the abnormal class.

In non-claimed embodiments, the data augmentation system 20 may augment a dataset of a class other than minority class. For example, the data augmentation system 20 may augment the dataset 23 of the majority class in the original dataset 21 to meet a predetermined data ratio.

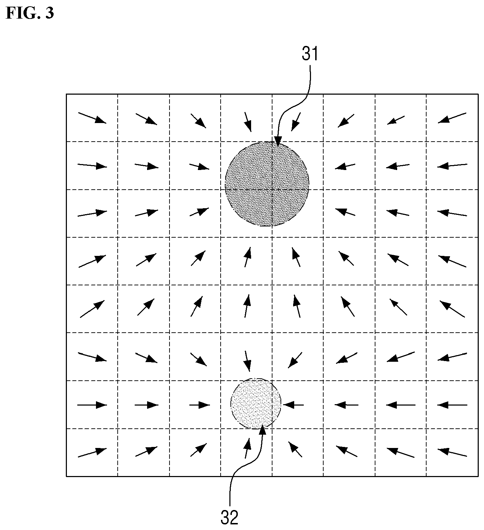

In various embodiments of the present disclosure, the data augmentation system 20 may perform data augmentation using a score-based generative model. Since the score-based generative model uses a neural network-based score prediction model, it is possible to accurately learn distributions and predict scores for high-dimensional samples, thereby generating high-quality fake samples even when the original dataset 21 is composed of high-dimensional samples (e.g., tabular data made up of several fields). The present embodiment will be described in detail below with reference to FIG. 3 below.

The data augmentation system 20 may be implemented with at least one computing device. For example, all functions of the data augmentation system 20 may be implemented with one computing device, and a first function of the data augmentation system 20 may be implemented with a first computing device and a second function may be implemented with a second computing device. Alternatively, a specific function of the data augmentation system 20 may be implemented with a plurality of computing devices.

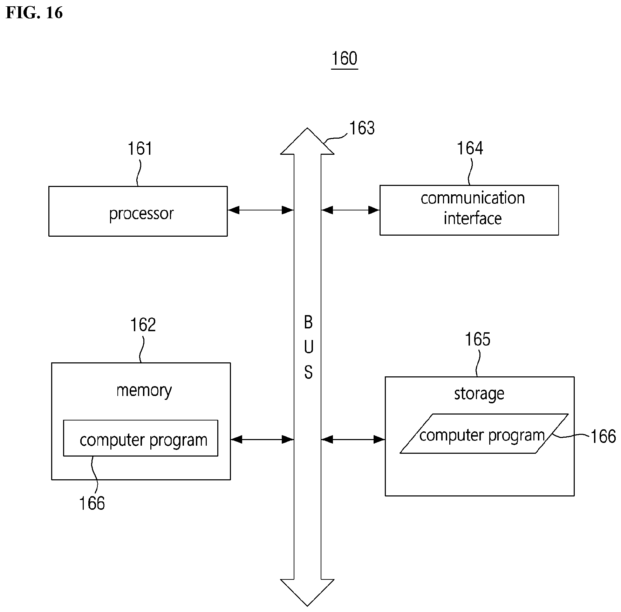

The computing device may include all types of devices with a computing function, and FIG. 16 will be referenced for an example of the computing device.

Until now, the data augmentation system 20 according to some embodiments of the present disclosure has been described with reference to FIG. 2. Hereinafter, in order to provide convenience of understanding, a score-based generative model that may be referenced in some embodiments of the present disclosure will be briefly described with reference to FIGS. 3 to 6.

The score-based generative model may refer to a model that can generate data (e.g., fake samples) using scores, and the score may refer to a value of a gradient vector for data density. For example, the score may have the meaning of a differential value of a log probability density function (or a log likelihood) for the data.

The reason for using scores to generate a fake sample is as follows. Because the direction of the gradient vector to the data density indicates the direction of increasing data density, the use of the score allows the fake sample to be generated (sampled) in an area with high density (i.e., the score enables a sampling point to be easily moved to the high-density area), and the generated fake sample has very similar characteristics to an actual sample. This is because the area with high data density in a data space indicates an area where actual samples are concentrated. For example, FIG. 3 illustrates relatively dense areas 31 and 32 and scores (see arrows) in the data space, and it can be observed that when a specific point moves along the direction of the score, it may move to the relatively dense areas 31 and 32.

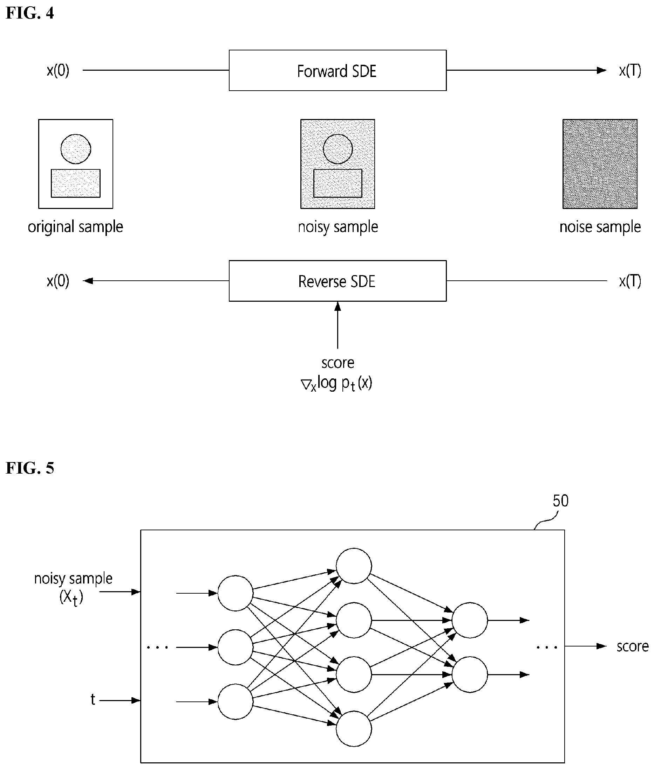

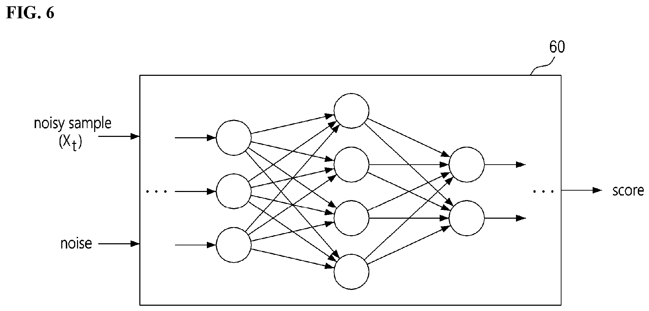

**In** the score-based generative model, the prediction of the score described above may be performed by a score prediction model with a learnable parameter. As the score prediction model is meant to predict scores for input data (samples), it may be implemented, for example, with neural networks of various structures (see FIGS. 5 and 6).

The score prediction model may be learned using samples from the original dataset, and more precisely, using noisy samples generated from samples from the original dataset. For example, a model that predicts scores of the first class may be learned using noisy samples of the first class, and a model that predicts scores of the second class may be learned using noisy samples of the second class. As described above, the noisy sample may mean a sample generated by adding noise (e.g., Gaussian noise with a normal distribution) with a specified (known) distribution to the original sample.

The reason for adding noise can be understood as a way to prevent the reduced prediction accuracy of scores in an area with low data density and as a way to facilitate learning of the score prediction model by simplifying a loss function of the score prediction model. Furthermore, since correct scores (or distributions) of the original samples cannot be unknown, it can be understood that the learning is performed in a manner of indirectly predicting the score of the noisy sample to which the noise with the known distribution is added.

The process of adding noise to the original sample may be modeled continuously or discretely.

For example, as illustrated in FIG. 4, the process of adding noise may be modeled in a continuous form using a stochastic differential equation (SDE) (see the Forward SDE process). In FIG. 4, t denotes a time variable, x(t) denotes a noisy sample at a time point t, and x(0) denotes an original sample. As illustrated, the original sample (see x(0)) may be gradually changed to a noise state by an addition of noise and finally transformed into a noisy (or noise) sample (see x(T)) with a specified distribution. In addition, a variety of noisy samples generated up to the time point T may be used to learn the score prediction model. Since one of ordinary skill in the art to which the present disclosure pertains will already be familiar with the SDE used in the score-based generative model, a detailed description thereof will be omitted. In the present example, a score prediction model 50 may be designed to predict a score by receiving the noisy sample x(t) and the time point t, as illustrated in FIG. 5. However, the scope of the present disclosure is not limited thereto.

For another example, the process of adding noise may be modeled in the form (i.e., a discrete form) of adding noise of a specified scale step by step (gradually). In that case, a score prediction model 60 may be designed to predict a score by receiving the noisy sample and an added noise (e.g., a noise scale value) as illustrated in FIG. 6. However, the scope of the present disclosure is not limited thereto.

The process of generating a fake sample using the score prediction model may be performed together with the process of removing noise. For example, referring back to FIG. 4, it can be understood that the process of generating a fake sample gradually removes noise from the noisy (or noise) sample (see x(T)) of the specified distribution using the score predicted by the score prediction model, and updates the noisy sample to have the distribution of the original sample (see the reverse SDE process). To this end, the Markov Chain Monte Carlo (MCMC) technique and the Euler-Maruyama solver may be used, but the scope of the present disclosure is not limited thereto. Furthermore, it can be understood that the fake sample is generated by repeatedly performing the process of updating the noisy sample to the area with high data density using the predicted score and the process of removing noise.

Since one of ordinary skill in the art to which the present disclosure pertains may already be familiar with the operating principle and learning method of the score-based generative model, a detailed description thereof will be omitted.

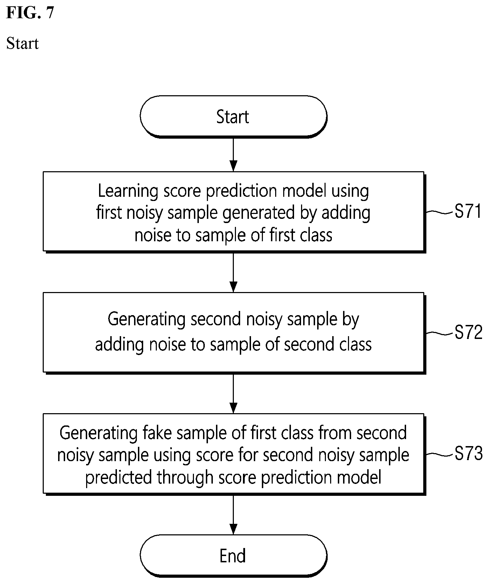

Until now, the score-based generative model has been briefly described with reference to FIGS. 3 to 6. Hereinafter, a variety of methods that may be performed by the data augmentation system 20 based on the description described above will be described with reference to FIG. 7 below.

Hereinafter, in order to provide convenience of understanding, the description will be continued assuming that all steps/operations of methods to be described below are performed by the aforementioned data augmentation system 20. Accordingly, when the subject of a specific step/operation is omitted, the data augmentation system 20 may be interpreted to be performed. In addition, to provide more convenience of understanding, the description will be continued assuming that the original dataset consists of "two" classes, unless otherwise stated.

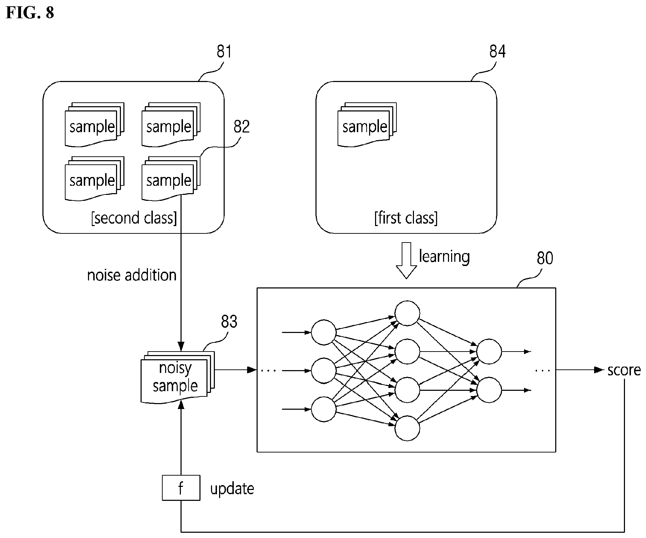

FIG. 7 is an exemplary flowchart illustrating a method for augmenting data according to a first embodiment of the present disclosure, and FIG. 8 is an exemplary diagram further explaining the same. However, the flowchart illustrated in FIG. 7 is only a preferred embodiment for achieving the purpose of the present disclosure, and some steps may be added as necessary.

As illustrated in FIG. 7 or FIG. 8, the present embodiment relates to a method of augmenting a dataset 84 of the first class by generating the fake sample of the first class using a sample 82 of the second class. Herein, the first class is a minority class, and the second class is a majority class.

As illustrated in FIG. 7, the present embodiment may be started in a step S71 of learning the score prediction model using a first noisy sample. The first noise sample may be generated by adding noise (e.g., Gaussian noise with a normal distribution) with the specified distribution to the sample of the first class, and the process of adding noise may be performed gradually. For example, the data augmentation system 20 may gradually add noise with the specified distribution to the sample of the first class to generate a plurality of first noisy samples and may learn the score prediction model using the generated first noise samples. As illustrated in FIG. 8, this step may be repeatedly performed on samples belonging to the dataset 84 of the first class, and as a result, a score prediction model 80 may have a score prediction capability for the first class.

In a step S72, a second noisy sample may be generated by adding noise to the sample of the second class. For example, as illustrated in FIG. 8, the data augmentation system 20 may gradually add noise (e.g., Gaussian noise with a normal distribution) with the specified distribution (i.e., the same distribution as the noise added to the sample of the first class) to the sample 82 belonging a dataset 81 of the second class, thus generating a second noisy sample 83. The second noisy sample 83 generated in this way may have a specified noise distribution while including data characteristics of the second class.

In a step S73, the fake sample of the first class may be generated from the second noisy sample using a score for the second noisy sample predicted through the score prediction model. For example, as illustrated in FIG. 8, the data augmentation system 20 may generate the fake sample by updating the second noisy sample 83 using a score predicted through the score prediction model 80.

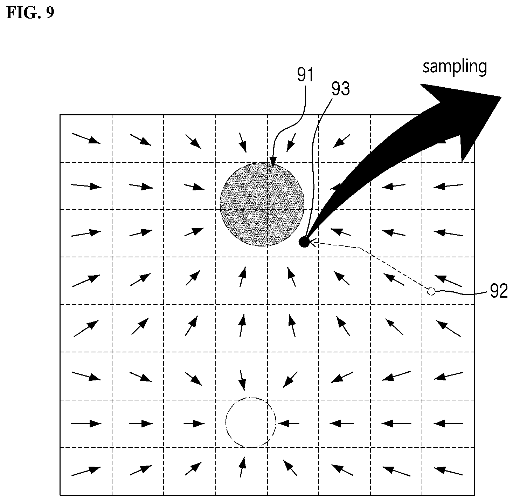

Conceptually, as illustrated in FIG. 9, a second noisy sample 92 may be updated such that a position (point) of the second noisy sample 92 in the data space moves to a high-density area 91 along the direction of the score (gradient vector), and a finally updated noisy sample 93 may be a fake sample disposed near the high-density area 91. In other words, a point 93 near the high-density area 91 may be a sampling point of the fake sample.

In addition, as described above, the process of updating the noisy sample may be performed together with the process of removing noise. For example, the data augmentation system 20 may update the second noise sample, generate a de-noised sample by removing noise from the second noise sample, and update the de-noised sample using a score of the generated de-noised sample. The process can be repeatedly performed while gradually removing noise, thereby generating a high-fidelity fake sample (see the reverse SDE process of FIG. 4).

Until now, the method of augmenting data augmentation the first embodiment of the present disclosure has been described with reference to FIGS. 7 to 9. As described above, the dataset of the first class may be augmented using the score prediction model. For example, the dataset of the minority class may be augmented in the original dataset. In that case, the class imbalance issue present in the original dataset can be solved to ultimately improve the performance of the classification model. In addition, the fake sample of the first class may be generated using the noisy sample of the second class and the score prediction model of the first class. For example, the fake sample of the minority class may be generated using the noisy sample of the majority class and the score prediction model of the minority class. In that case, since the fake sample may be generated in an area between the two classes (i.e., an area between two classes in the data space), the effect of generating the fake sample in various areas in the data space can be achieved.

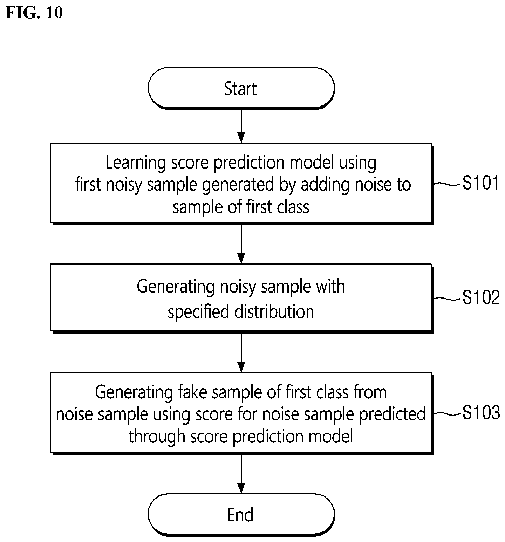

Hereinafter, the method for augmenting data according to a second embodiment of the present disclosure will be described with reference to FIG. 10. However, for clarity of the present disclosure, a description of the content overlapping the previous embodiments will be omitted.

FIG. 10 is an exemplary flowchart illustrating the method for augmenting data according to a second embodiment of the present disclosure. However, this is only a preferred embodiment for achieving the purpose of the present disclosure, and some steps may be added or deleted as necessary.

As illustrated in FIG. 10, the present embodiment relates to a method of generating the fake sample of the first class using a noise sample.

Specifically, the present embodiment may be started in a step S101 of learning the score prediction model of the first class. The description of the step S71 will be referenced for the description of this step.

In a step S102, the noise sample with a specified distribution may be generated. Herein, the specified distribution may be the same distribution as the noise added to the sample of the first class. For example, when the Gaussian noise with the normal distribution is added to the sample of the first class, the data augmentation system 20 may generate the noise sample with the normal distribution.

In a step S103, the fake sample of the first class may be generated from the noise sample using the score for the noise sample predicted through the score prediction model. For example, the data augmentation system 20 may generate the fake sample by gradually removing noise from the noise sample and updating the corresponding sample using the predicted score. This step is similar to the step S73 described above, and a further description thereof will be omitted.

Until now, the method for augmenting data according to the second embodiment of the present disclosure has been described with reference to FIG. 10. As described above, the dataset of the first class may be augmented using the score prediction model. For example, the dataset of the minority class may be augmented in the original dataset, which can easily solve the class imbalance issue present in the original dataset.

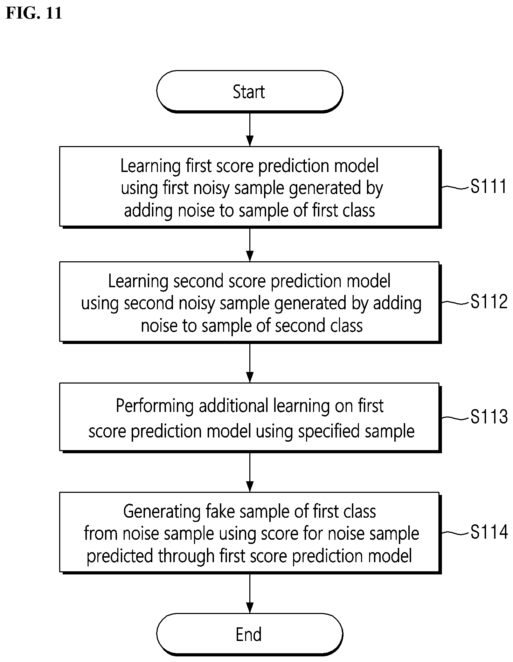

Hereinafter, the method for augmenting data according to a third embodiment of the present disclosure will be described with reference to FIGS. 11 to 14.

FIG. 11 is an exemplary flowchart illustrating the method for augmenting data according to the third embodiment of the present disclosure. However, this is only a preferred embodiment for achieving the purpose of the present disclosure, and some steps may be added or deleted as necessary.

As illustrated in FIG. 11, the present embodiment relates to a method of further improving the quality of the fake sample through continued learning of the score prediction model ("a first score prediction model") of the first class.

As illustrated, the present embodiment may be started in a step S111 of learning the first score prediction model. The description of the step S71 will be referenced for the description of this step.

In a step S112, a second score prediction model may be learned using the second noisy sample generated by adding noise to the sample of the second class. Since this step is also similar to the step S71, the description of the step S71 will be referenced for this step.

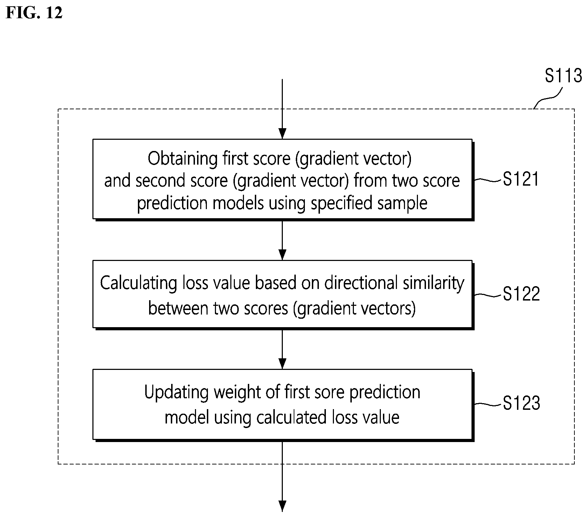

In a step S113, the additional learning on the first score prediction model may be performed using a specified sample. A detailed process of the step is illustrated in FIG. 12.

As illustrated in FIG. 12, the additional learning step S113 may be started in a step S121 of obtaining a first score and a second score for the specified sample from two score prediction models using the specified sample. Herein, the specified sample may include, for example, a sample of the first class and/or the second class, a noisy sample of the first class and/or the second class, and a noise sample. For example, the data augmentation system 20 may select a sample of a certain class (e.g., random selection) from the original dataset, transform the selected sample into a noisy sample at a certain time point (e.g., random time point t), and perform additional learning using the transformed noisy sample. Naturally, such a process may be repeatedly performed on a variety of samples included in the original dataset.

In steps S122 and S123, a loss value for the additional learning may be calculated based on directional similarity between the two scores, and the weight of the first score prediction model may be updated using the calculated loss value. Since each score is a gradient vector, the directional similarity of the two scores may be calculated based on, for example, cosine similarity, a dot product, and an interval angle. However, the scope of the present disclosure is not limited thereto. In some cases, a distance-based similarity may be used instead of the directional similarity, or the direction similarity and the distance-based similarity may be used together.

Meanwhile, a detailed method for calculating the loss value may vary according to embodiments.

In one embodiment, when the direction similarity between the two scores is equal to or greater than a reference value (i.e., when the directions are similar), the loss value may be calculated as a positive value. For example, the data augmentation system 20 may calculate a positive loss value so that the additional learning is performed only when the direction similarity is equal to or greater than the reference value, and may calculate a loss value as "0" so that the additional learning is not performed when the direction similarity is equal to or less than the reference value. For example, the data augmentation system 20 may calculate the loss value using a loss function L according to Equation 1 below. In Equation 1 below, "x" denotes a specified sample, "t" denotes a time point t, and "$S_o$" denotes a score prediction model. Furthermore, "g" denotes a predicted score (i.e., a gradient vector), and "w" and "$\lambda$" denote a weight parameter and a value for adjusting the loss value, respectively. In addition, symbol "+" means the second class, and symbol "-" means the first class. Equation 1 below assumes that the directional similarity between the two scores ($g^+$ and $g^-$) is calculated using the dot product.

<Equation 1>

$$L(x, t) = \left\| S_{\theta-}(x, t) - w g_{x,t}^- \right\|_2^2, \qquad (0 < w \le 1)$$

$$\begin{cases} w = 1 \;\; if \;\; g_{x,t}^+ \cdot g_{x,t}^- < 0 \\ w = \lambda \;\; otherwise \end{cases}$$

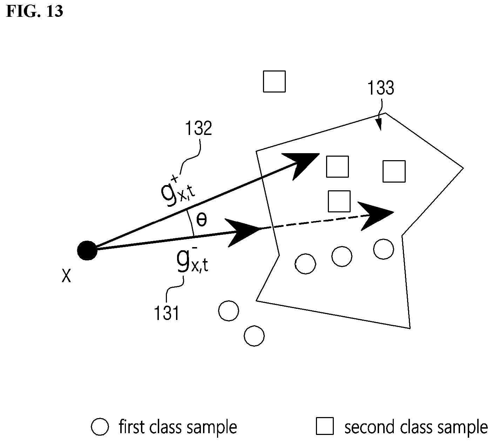

Referring to Equation 1, when the dot product (the directional similarity) of the two scores is negative (i.e., when the interval angle between the two gradient vectors is 90 degrees or more and 270 degrees or less), the loss value may be calculated as "0" since the value of w is "1". Conversely, when the dot product (the directional similarity) of the two scores is positive (i.e., the interval angle between the two gradient vectors is 90 degrees or less or 270 degrees or more and 360 degrees or less), the loss value can be calculated as a positive value because the value of w is not "1". Using the loss function according to Equation 1 above, when the directions of the first score and the second score for the specified sample are similar to each other, additional learning may be performed on the first score prediction model, and through the additional learning, it is possible to prevent the first score prediction model from predicting a score similar to the second score prediction model in the position (i.e., a sample point in the data space) of the specified sample. For example, as illustrated in FIG. 13, when the directions of two scores 131 and 132 are similar to each other in a location of a specified sample x, the additional learning can reduce the size of the first score 131, thereby preventing the noisy sample from being updated (moved) to an area 133 where the samples of several classes are mixed (so-called "a gray area") when generating a fake sample. Accordingly, it is possible to generate a high-quality fake sample that is well distinguished from the second class and reflects unique data characteristics of the first class.

For reference, although Equation 1 assumes that the reference value compared with the directional similarity is "0", the reference value may be set to any other value.

In another embodiment, as the directional similarity increases, the loss value may be calculated as an increased value. In that case, as the directions of the two scores are similar, the additional learning for the first score prediction model can be performed strongly in order to further improve the quality of the generated fake sample.

It will be described again with reference to FIG. 11.

In a step S114, the fake sample of the first class may be generated using the score predicted through the first score prediction model. For example, the data augmentation device 20 may generate the fake sample of the first class by using a prediction score for the noisy sample of the second class and/or the noise sample having the specified distribution. This step is similar to the step S73 or S103, and a further description thereof will be omitted.

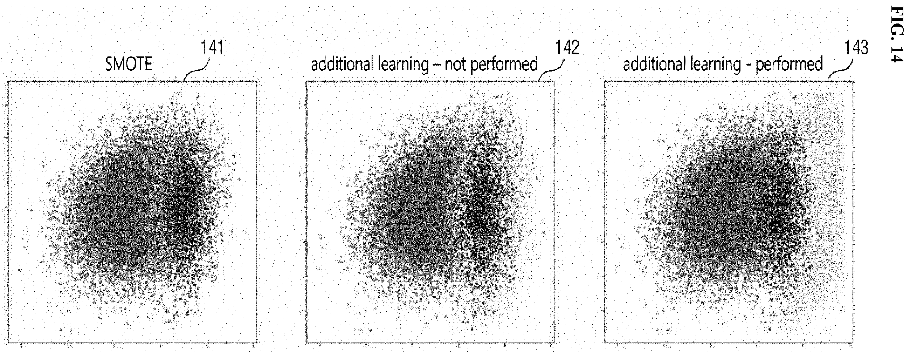

FIG. 14 illustrates a comparative experiment result of the method for augmenting data according to some embodiments of the present disclosure and the SMOTE. Specifically, the leftmost chart 141 shows the data augmentation result according to the SMOTE, the middle chart 142 shows the data augmentation result according to the combination of the first and second embodiments described above, and the rightmost chart 143 shows the data augmentation result when the additional learning is performed according to the third embodiment.

As illustrated in FIG. 14, in the case of the SMOTE, it can be seen that the fake samples are generated only between the samples of the minority class (see chart 141), and in the case of the method for augmenting data according to the first and second embodiments, the fake samples are generated even between the majority class and the minority class (see chart 142). In addition, in the case of the method for augmenting data according to the third embodiment, it can be seen that the fake samples are generated in an area clearly distinguished from the majority class (see chart 143). Accordingly, when the additional learning is performed, it can be seen that the fake sample of the first class with characteristics more distinct from those of the second class may be generated (see chart 143). When the fake sample of the first class is generated using the noisy sample of the second class, it can be seen that the fake sample may be generated in the area between the two classes.

Until now, the method for augmenting data according to the third embodiment of the present disclosure has been described with reference to FIGS. 11 to 14. As described above, the strong occurrence of the scores (i.e., the gradient vector) indicating the area where the samples of several classes are concentrated (mixed) may be prevented through the additional learning of the score prediction model. Accordingly, it is possible to prevent the fake sample from being generated in the area where the samples of several classes are concentrated (mixed), and as a result, the fake sample of the first class with the characteristics that are well distinguished from the second class may be generated. For instance, the fake sample of the minority class with characteristics that are well distinguished from the samples of the majority class may be generated.

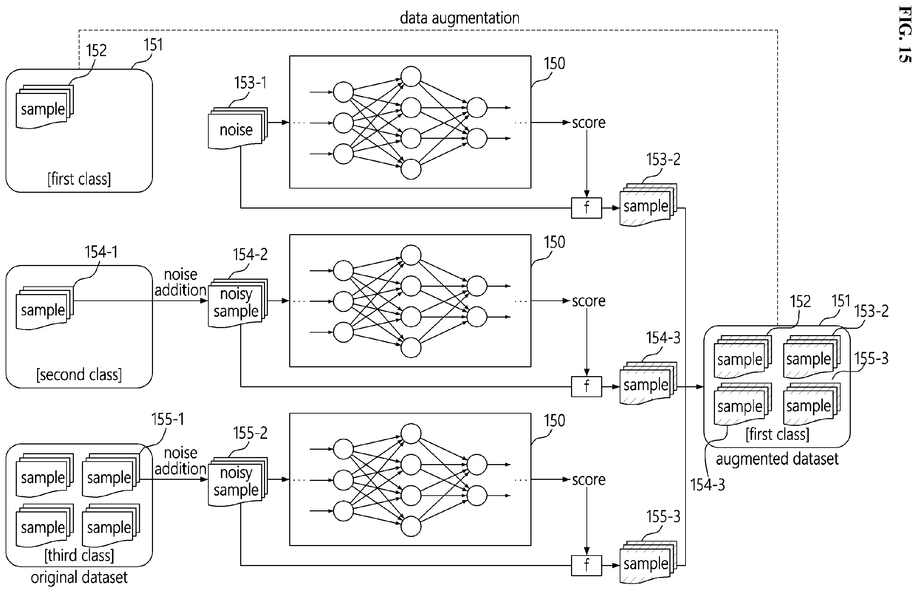

Hereinafter, the method for augmenting data according to a fourth embodiment of the present disclosure will be described with reference to FIG. 15.

FIG. 15 is an exemplary view illustrating the method for augmenting data according to the fourth embodiment of the present disclosure.

As illustrated in FIG. 15, the present embodiment relates to a method of augmenting a dataset of the first class in three or more multi-class environments. FIG. 15 illustrates the example that the first and second classes are minority classes and a third class is a majority class, but the scope of the present disclosure is not limited thereto. For example, even when the second class is the majority class, the content as will be described below may be applied without substantial change in the technical idea. In addition, FIG. 15 repeatedly illustrates a score prediction model 150 of the first class for convenience of understanding.

As illustrated, in order to augment a dataset 151 of the first class, a noise sample 153-1, a sample 154-1 of the second class, and/or a sample 155-1 of the third class may be used.

For example, when the learning of the score prediction model 150 of the first class is completed, the data augmentation system 20 may generate a noise sample 153-1 with a specified distribution and may generate a first fake sample 153-2 using a score for a noise sample 153-1 predicted through the score prediction model 150. In order to exclude the redundant description, a detailed description thereof will be omitted.

In addition, for example, the data augmentation system 20 may generate a noisy sample 154-2 from the sample 154-1 of the second class and may generate a second fake sample 154-3 using a score for the noisy sample 154-2 predicted through the score prediction model 150. In order to exclude the redundant description, a detailed description thereof will also be omitted.

In addition, for example, the data augmentation system 20 may generate a noisy sample 155-2 from the sample 154-1 of the third class and may generate a third fake sample 155-3 using a score for the noisy sample 155-2 predicted through the score prediction model 150. In order to exclude the redundant description, a detailed description thereof will also be omitted.

As illustrated, when using both the noise sample 153-1 and the samples 154-1 and 155-1 of different classes, the data set 151 of the first class may include first to third fake samples 153-2, 154-3 and 155-3 in addition to the existing sample 152. Accordingly, the class imbalance issue present in the original dataset can be easily solved.

Although not illustrated in FIG. 15, the dataset of the second class can be augmented in a manner similar to that described above. For example, the dataset of the second class may be augmented using the noise sample with the specified distribution, the noisy sample generated from the sample of the first class, and/or a noisy sample generated from the sample of the third class. Naturally, data augmentation for the second class may be performed using the score prediction model of the second class.

Until now, the method for augmenting data according to the fourth embodiment of the present disclosure has been described with reference to FIG. 15.

Until now, the method for augmenting data according to the first to fourth embodiments of the present disclosure have been described with reference to FIGS. 7 to 15. For convenience of understanding, embodiments have been described individually, but the aforementioned embodiments may be combined in various forms. For example, in another embodiment of the present disclosure, the data augmentation system 20 may perform the additional learning for the score prediction model according to the third embodiment described above and may perform data augmentation in the multi-class environments according to the fourth embodiment described above.

The method for augmenting data according to the various embodiments of the present disclosure described above is applied to generate a training dataset of an anomaly detection model in the field of anomaly detection (e.g., generate a training dataset by augmenting a dataset of an anomaly class) or improve performance of the anomaly detection model (e.g., the performance of the anomaly detection model is improved by training a rich dataset of anomaly classes).

In a non-claimed embodiment, the method for augmenting data described above may be applied to augment a dataset of a patient suffering from a target disease. In this example, the performance of a model for diagnosing the target disease (e.g., the model that has learned the patient dataset and a normal dataset) can be greatly improved through learning based on the augmented patient dataset.

As another non-claimed embodiment, the method for augmenting data described above may be applied to augment a dataset related to fraudulent transactions (e.g., fraudulent card payments, etc.). In this example, the performance of a model for detecting the fraudulent transaction (e.g., the model that has learned a fraudulent transaction dataset and a normal transaction dataset) can be greatly improved through learning based on the augmented fraudulent transaction dataset.

As another non-claimed embodiment, the method for augmenting data may be applied to augment a dataset related to an anomaly of processes or equipment (e.g., manufacturing processes or manufacturing equipment). In this example, the performance of a model for detecting the anomaly of the processes or the equipment (e.g., the model that has learned an anomaly/abnormal dataset and a normal dataset) can be greatly improved through learning based on the augmented anomaly dataset.

As another non-claimed embodiment, the method for augmenting data described above may be applied to augment a dataset related to a defective product. In this example, the performance of a model for detecting the defective product (e.g., the model that has learned the defective product dataset and a good product dataset) can be greatly improved through learning based on the augmented defective product dataset.

Hereinafter, an exemplary computing device 160 capable of implementing the data augmentation system 20 according to some embodiments of the present disclosure will be described with reference to FIG. 16.

FIG. 16 is an exemplary diagram of a hardware configuration illustrating a computing device 160.

As illustrated in FIG. 16, the computing device 160 may include one or more processors 161, a bus 163, a communication interface 164, a memory 162 configured to load a computer program 166 performed by the processor 161, and a storage 165 configured to store the computer program 166. However, only components related to embodiments of the present disclosure are illustrated in FIG. 16. Therefore, it may be seen by one of ordinary skill in the art to which the present disclosure pertains that other general-purpose components may be further included in addition to the components illustrated in FIG. 16. In other words, the computing device 160 may further include various components in addition to the components illustrated in FIG. 16. In addition, in some cases, the computing device 160 may be configured in the form in which some of the components illustrated in FIG. 16 are omitted. Hereinafter, each component of the computing device 160 will be described.

The processor 161 may control the overall operations of each component of the computing device 160. The processor 161 may include at least one of a central processing unit (CPU), a micro-processor unit (MPU), a micro-controller unit (MCU), a graphical processing unit (GPU), and any type of processor well-known in the technical field of the present disclosure. Furthermore, the processor 161 may perform an arithmetic operation on at least one application or program for executing operations/methods according to the embodiments of the present disclosure. The computing device 160 may include one or more processors.

Next, the memory 162 may store different kinds of data, instructions, and/or information. The memory 162 may load the computer program 166 from the storage 165 to execute the operations/methods according to the embodiments of the present disclosure. The memory 162 may be implemented as a volatile memory such as a RAM, but the technical scope of the present disclosure is not limited thereto.

Next, the bus 163 may provide a communication function between components of the computing device 160. The bus 163 may be implemented as various types of buses such as an address bus, a data bus, and a control bus.

Next, the communication interface 164 may support wired/wireless Internet communication of the computing device 160. In addition, the communication interface 164 may support a variety of communication ways other than Internet communication. To this end, the communication interface 164 may include a communication module well-known in the technical field of the present disclosure. In some cases, the communication interface 164 may be omitted.

Next, the storage 165 may non-temporarily store one or more computer programs 166. The storage 165 may include non-volatile memories such as a read-only memory (ROM), an erasable programmable ROM (EPROM), an electrically erasable programmable ROM (EEPROM) and a flash memory, a hard disk, a removable disk, or any type of computer-readable recording medium well-known in the technical field to which the present disclosure belongs.

Next, the computer program 166 may include one or more instructions that cause the processor 161 to perform the operations/methods according to various embodiments of the present disclosure when loaded into the memory 162. In other words, the processor 161 may execute one or more instructions loaded in the memory 162 to perform the operations/methods according to various embodiments of the present disclosure.

For example, the computer program 166 may include one or more instructions for performing an operation of obtaining a score prediction model learned using the noisy sample of the first class, an operation of adding noise with the specified distribution to the sample of second class to generate the second noisy sample, and an operation of generating the fake sample of the first class from the second noisy sample using the score for the second noisy sample predicted through the score prediction model. In that case, the data augmentation system 20 according to some embodiments of the present disclosure may be implemented through the computing device 160.

Until now, the exemplary computing device 160 capable of implementing the data augmentation system 20 according to some embodiments of the present disclosure has been described with reference to FIG. 16.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

**Claims**

1. A method for augmenting data performed by at least one computing device to obtain an augmented dataset (24) and for utilizing the augmented dataset (24) as a training dataset of an anomaly detection model, wherein the augmented dataset (24) is generated from an original dataset (21) comprising a first class and a second class, the method comprising:

obtaining a score prediction model (50, 60, 80, 150) learned using a first noisy sample, wherein the first noisy sample is generated by adding noise with a specified distribution to a sample of the first class, the score prediction model (50, 60, 80, 150) is learned to predict a score by receiving the first noisy sample, and the predicted score is a value of a gradient vector for data density of the first class in the data space;
generating a second noisy sample (83, 92) by adding the noise with the specified distribution to a sample of the second class; and
generating a fake sample of the first class from the second noisy sample using a score for the second noisy sample, the score for the second noisy sample being predicted through the score prediction model,
wherein the anomaly detection model is a classification model,
wherein the first class is an abnormal class, and the second class is a normal class, wherein a number of samples of the first class is less than a number of samples of the second class in the original data set (21), and wherein each sample constituting the original dataset (24) is an image.

2. The method for augmenting data of claim 1, wherein the score prediction model (50, 60, 80, 150) is a first score prediction model (50, 60, 80, 150),

the first score prediction model (50, 60, 80, 150) is obtained by performing additional learning based on a specified sample, and
the additional learning is performed through steps of:

predicting a first score for the specified sample through the first score prediction model (50, 60, 80, 150);
predicting a second score for the specified sample through a second score prediction model (50, 60, 80, 150) learned using a noisy sample of the second class; and
updating a weight of the first score prediction model (50, 60, 80, 150) using a loss value calculated based on a directional similarity between the first score and the second score.

3. The method for augmenting data of claim 2, wherein the loss value is calculated as a positive value when the directional similarity is equal to or greater than a reference value.

4. The method for augmenting data of claim 2, wherein the loss value is calculated to be a larger value as the directional similarity increases.

5. The method for augmenting data of claim 2, wherein the specified sample comprises a noisy sample of the first class and a noisy sample of the second class.

6. The method for augmenting data of claim 1, wherein the generating the fake sample comprises:
updating the second noisy sample in a direction of increasing the data density in the data space using the score for the second noisy sample.

7. The method for augmenting data of claim 6, wherein the generating the fake sample further comprises:

generating a de-noised sample by removing at least some of the noise from the updated second noise sample; and
updating the de-noised sample using a score for the de-noised sample predicted through the score prediction model (50, 60, 80, 150).

8. The method for augmenting data of claim 1, further comprising:

generating a noise sample with the specified distribution; and
generating an additional fake sample of the first class from the noise sample using a score for the noise sample predicted through the score prediction model (50, 60, 80, 150).

9. The method for augmenting data of claim 1, further comprising:

generating a third noisy sample by adding noise with the specified distribution to a sample of a third class; and
generating an additional fake sample of the first class from the third noisy sample using a score for the third noisy sample predicted through the score prediction model (50, 60, 80, 150).

10. A data augmentation system (20) for obtaining an augmented dataset (24) and for utilizing the augmented dataset (24) as a training dataset of an anomaly detection model, wherein the augmented dataset (24) is generated from an original dataset (21) comprising a first class and a second class, comprising:

one or more processors; and
a memory configured to store one or more instructions,
wherein the one or more processors, by executing the one or more stored instructions, perform the method of claim 1.

**11.** A computer-readable medium storing a computer program which, when executed on a computer, is configured to carry out the method of claim 1.

**Patentansprüche**

**1.** Verfahren zum Erweitern von Daten, das von mindestens einer Rechenvorrichtung durchgeführt wird, um einen erweiterten Datensatz (24) zu erhalten und um den erweiterten Datensatz (24) als Trainingsdatensatz eines Anomalieerkennungsmodells zu nutzen, wobei der erweiterte Datensatz (24) aus einem Originaldatensatz (21) erzeugt wird, der eine erste Klasse und eine zweite Klasse umfasst, wobei das Verfahren Folgendes umfasst:

Erhalten eines Bewertungsvorhersagemodells (50, 60, 80, 150), das unter Verwendung einer ersten verrauschten Probe gelernt wird, wobei die erste verrauschte Probe durch Hinzufügen von Rauschen mit einer spezifizierten Verteilung zu einer Abtastung der ersten Klasse erzeugt wird, das Bewertungsvorhersagemodell (50, 60, 80, 150) gelernt wird, um eine Bewertung durch Empfangen der ersten verrauschten Probe vorherzusagen, und die vorhergesagte Bewertung ein Wert eines Gradientenvektors für Datendichte der ersten Klasse in dem Datenraum ist;
Erzeugen einer zweiten verrauschten Probe (83, 92) durch Addieren des Rauschens mit der spezifizierten Verteilung zu einer Probe der zweiten Klasse; und
Erzeugen einer gefälschten Probe der ersten Klasse aus der zweiten verrauschten Probe unter Verwendung einer Bewertung für die zweite verrauschte Probe, wobei die Bewertung für die zweite verrauschte Probe durch das Bewertungsvorhersagemodell vorhergesagt wird,
wobei das Anomalieerkennungsmodell ein Klassifizierungsmodell ist,
wobei die erste Klasse eine anormale Klasse ist und die zweite Klasse eine normale Klasse ist, wobei eine Anzahl von Proben der ersten Klasse kleiner als eine Anzahl von Proben der zweiten Klasse in dem ursprünglichen Datensatz (21) ist, und wobei jede Probe, die den ursprünglichen Datensatz (24) bildet, ein Bild ist.

**2.** Verfahren zum Erweitern von Daten nach Anspruch 1, wobei das Bewertungsvorhersagemodell (50, 60, 80, 150) ein erstes Bewertungsvorhersagemodell (50, 60, 80, 150) ist,

das erste Bewertungsvorhersagemodell (50, 60, 80, 150) erhalten wird, indem zusätzliches Lernen basierend auf einer spezifizierten Probe durchgeführt wird, und
das zusätzliche Lernen durch folgende Schritte durchgeführt wird:

Vorhersagen einer ersten Bewertung für die spezifizierte Probe durch das erste Bewertungsvorhersagemodell (50, 60, 80, 150);
Vorhersagen einer zweiten Bewertung für die spezifizierte Probe durch ein zweites Bewertungsvorhersagemodell (50, 60, 80, 150), das unter Verwendung einer verrauschten Probe der zweiten Klasse gelernt wurde; und
Aktualisieren einer Gewichtung des ersten Bewertungsvorhersagemodells (50, 60, 80, 150) unter Verwendung eines Verlustwerts, der basierend auf einer Richtungsähnlichkeit zwischen der ersten Bewertung und der zweiten Bewertung berechnet wird.

**3.** Verfahren zum Erweitern von Daten nach Anspruch 2, wobei der Verlustwert als ein positiver Wert berechnet wird, wenn die Richtungsähnlichkeit gleich oder größer als ein Referenzwert ist.

**4.** Verfahren zum Erweitern von Daten nach Anspruch 2, wobei der Verlustwert als ein größerer Wert berechnet wird, wenn die Richtungsähnlichkeit zunimmt.

**5.** Verfahren zum Erweitern von Daten nach Anspruch 2, wobei die spezifizierte Probe eine verrauschte Probe der ersten Klasse und eine verrauschte Probe der zweiten Klasse umfasst.

**6.** Verfahren zum Erweitern von Daten nach Anspruch 1, wobei das Erzeugen der gefälschten Probe Folgendes umfasst:
Aktualisieren der zweiten verrauschten Probe in einer Richtung zum Erhöhen der Datendichte in dem Datenraum unter Verwendung der Bewertung für die zweite verrauschte Probe.

7. Verfahren zum Erweitern von Daten nach Anspruch 6, wobei das Erzeugen der gefälschten Probe ferner Folgendes umfasst:

Erzeugen einer entrauschten Probe durch Entfernen mindestens eines Teils des Rauschens aus der aktualisierten zweiten Rauschprobe; und
Aktualisieren der entrauschten Probe unter Verwendung einer Bewertung für die entrauschte Probe, die durch das Bewertungsvorhersagemodell (50, 60, 80, 150) vorhergesagt wird.

8. Verfahren zum Erweitern von Daten nach Anspruch 1, das ferner Folgendes umfasst:

Erzeugen einer Rauschprobe mit der angegebenen Verteilung; und
Erzeugen einer zusätzlichen gefälschten Probe der ersten Klasse aus der Rauschprobe unter Verwendung einer Bewertung für die Rauschprobe, die durch das Bewertungsvorhersagemodell (50, 60, 80, 150) vorhergesagt wird.

9. Verfahren zum Erweitern von Daten nach Anspruch 1, das ferner Folgendes umfasst:

Erzeugen einer dritten verrauschten Probe durch Hinzufügen von Rauschen mit der spezifizierten Verteilung zu einer Probe einer dritten Klasse; und
Erzeugen einer zusätzlichen gefälschten Probe der ersten Klasse aus der dritten verrauschten Probe unter Verwendung einer Bewertung für die dritte verrauschte Probe, die durch das Bewertungsvorhersagemodell (50, 60, 80, 150) vorhergesagt wird.

10. Datenerweiterungssystem (20) zum Erhalten eines erweiterten Datensatzes (24) und zum Verwenden des erweiterten Datensatzes (24) als Trainingsdatensatz eines Anomalieerkennungsmodells, wobei der erweiterte Datensatz (24) aus einem ursprünglichen Datensatz (21) erzeugt wird, der eine erste Klasse und eine zweite Klasse umfasst, Folgendes umfassend:

einen oder mehrere Prozessoren; und
einen Speicher, der dazu ausgelegt ist, eine oder mehrere Anweisungen zu speichern,
wobei der eine oder die mehreren Prozessoren durch Ausführen der einen oder der mehreren gespeicherten Anweisungen das Verfahren nach Anspruch 1 durchführen.

11. Computerlesbares Medium, das ein Computerprogramm speichert, das, wenn es auf einem Computer ausgeführt wird, dazu ausgelegt ist, das Verfahren nach Anspruch 1 auszuführen.

**Revendications**

1. Procédé pour augmenter des données, réalisé par au moins un dispositif informatique pour obtenir un ensemble de données augmentées (24) et pour utiliser l'ensemble de données augmentées (24) en tant qu'ensemble de données d'entraînement d'un modèle de détection d'anomalie, dans lequel l'ensemble de données augmentées (24) est généré à partir d'un ensemble de données d'origine (21) comprenant une première classe et une deuxième classe, le procédé comprenant :

l'obtention d'un modèle de prédiction de note d'évaluation (50, 60, 80, 150) appris en utilisant un premier échantillon bruyant, dans lequel le premier échantillon bruyant est généré en ajoutant un bruit avec une distribution spécifiée à un échantillon de la première classe, le modèle de prédiction de note d'évaluation (50, 60, 80, 150) est appris pour prédire une note d'évaluation en recevant le premier échantillon bruyant, et la note d'évaluation prédite est une valeur d'un vecteur de gradient pour une densité de données de la première classe dans l'espace de données ;
la génération d'un deuxième échantillon bruyant (83, 92) en ajoutant le bruit avec la distribution spécifiée à un échantillon de la deuxième classe ; et
la génération d'un faux échantillon de la première classe à partir du deuxième échantillon bruyant en utilisant une note d'évaluation pour le deuxième échantillon bruyant, la note d'évaluation pour le deuxième échantillon bruyant étant prédite par l'intermédiaire du modèle de prédiction de note d'évaluation, dans lequel le modèle de détection d'anomalie est un modèle de classification, dans lequel la première classe est une classe anormale, et la deuxième classe est une classe normale, dans lequel un nombre d'échantillons de la première classe est inférieur à un nombre d'échantillons de la deuxième classe dans l'ensemble de données d'origine (21), et dans lequel chaque échantillon constituant l'ensemble de données d'origine (24) est une image.

2. Procédé pour augmenter des données de la revendication 1, dans lequel le modèle de prédiction de note d'évaluation (50, 60, 80, 150) est un premier modèle de prédiction de note d'évaluation (50, 60, 80, 150), le premier modèle de prédiction de note d'évaluation (50, 60, 80, 150) est obtenu en réalisant un apprentissage supplémentaire sur la base d'un échantillon spécifié, et l'apprentissage supplémentaire est réalisé par l'intermédiaire des étapes de :

la prédiction d'une première note d'évaluation pour l'échantillon spécifié, par l'intermédiaire du premier modèle de prédiction de note d'évaluation (50, 60, 80, 150) ;
la prédiction d'une seconde note d'évaluation pour l'échantillon spécifié, par l'intermédiaire d'un second modèle de prédiction de note d'évaluation (50, 60, 80, 150) appris en utilisant un échantillon bruyant de la deuxième classe ; et
l'actualisation d'un poids du premier modèle de prédiction de note d'évaluation (50, 60, 80, 150) en utilisant une valeur de perte calculée sur la base d'une similarité directionnelle entre la première note d'évaluation et la seconde note d'évaluation.

3. Procédé pour augmenter des données de la revendication 2, dans lequel la valeur de perte est calculée en tant que valeur positive lorsque la similarité directionnelle est égale ou supérieure à une valeur de référence.

4. Procédé pour augmenter des données de la revendication 2, dans lequel la valeur de perte est calculée pour être une valeur plus grande au fur et à mesure que la similarité directionnelle s'accroît.

5. Procédé pour augmenter des données de la revendication 2, dans lequel l'échantillon spécifié comprend un échantillon bruyant de la première classe et un échantillon bruyant de la deuxième classe.

6. Procédé pour augmenter des données de la revendication 1, dans lequel la génération du faux échantillon comprend : l'actualisation du deuxième échantillon bruyant dans une direction d'accroissement de la densité de données dans l'espace de données en utilisant la note d'évaluation pour le deuxième échantillon bruyant.

7. Procédé pour augmenter des données de la revendication 6, dans lequel la génération du faux échantillon comprend en outre :

la génération d'un échantillon débruité en éliminant au moins une certaine partie du bruit du second échantillon de bruit actualisé ; et
l'actualisation de l'échantillon débruité en utilisant une note d'évaluation pour l'échantillon débruité prédite par l'intermédiaire du modèle de prédiction de note d'évaluation (50, 60, 80, 150).

8. Procédé pour augmenter des données de la revendication 1, comprenant en outre :

la génération d'un échantillon de bruit avec la distribution spécifiée ; et
la génération d'un faux échantillon supplémentaire de la première classe à partir du échantillon de bruit en utilisant une note d'évaluation pour l'échantillon de bruit prédit par l'intermédiaire du modèle de prédiction de note d'évaluation (50, 60, 80, 150).

9. Procédé pour augmenter des données de la revendication 1, comprenant en outre :

la génération d'un troisième échantillon bruyant en ajoutant un bruit avec la distribution spécifiée à un échantillon d'une troisième classe ; et
la génération d'un faux échantillon supplémentaire de la première classe à partir du troisième échantillon bruyant en utilisant une note d'évaluation pour le troisième échantillon bruyant prédit par l'intermédiaire du modèle de prédiction de note d'évaluation (50, 60, 80, 150).

10. Système d'augmentation de données (20) pour obtenir un ensemble de données augmentées (24) et pour utiliser l'ensemble de données augmentées (24) en tant qu'ensemble de données d'entraînement d'un modèle de détection d'anomalie, dans lequel l'ensemble de données augmentées (24) est généré à partir d'un ensemble de données d'origine (21) comprenant une première classe et une deuxième classe, comprenant :

un ou plusieurs processeurs ; et
une mémoire configurée pour stocker une ou plusieurs instructions,
dans lequel l'un ou les plusieurs processeurs, en exécutant l'une ou les plusieurs instructions stockées, réalisent le procédé de la revendication 1.

11. Support lisible par ordinateur, stockant un programme d'ordinateur qui, lorsqu'il est exécuté sur un ordinateur, est configuré pour effectuer le procédé de la revendication 1.

**FIG. 1**

minority class sample ● generated sample ☐ majority class sample

**FIG. 2**

**FIG. 3**

**FIG. 4**

**FIG. 5**

**FIG. 6**

**FIG. 7**

Start

```
            ┌──────────────────┐
            │      Start        │
            └──────────────────┘
                     │
                     ▼
    ┌─────────────────────────────────────┐
    │  Learning score prediction model using │
    │  first noisy sample generated by adding │ ── S71
    │      noise to sample of first class    │
    └─────────────────────────────────────┘
                     │
                     ▼
    ┌─────────────────────────────────────┐
    │      Generating second noisy sample by │
    │   adding noise to sample of second class │ ── S72
    └─────────────────────────────────────┘
                     │
                     ▼
    ┌─────────────────────────────────────┐
    │ Generating fake sample of first class from second │
    │ noisy sample using score for second noisy sample  │ ── S73
    │    predicted through score prediction model       │
    └─────────────────────────────────────┘
                     │
                     ▼
            ┌──────────────────┐
            │       End         │
            └──────────────────┘
```

**FIG. 8**

**FIG. 9**

EP 4 261 750 B1

**FIG. 10**

Start

Learning score prediction model using
first noisy sample generated by adding noise to
sample of first class — S101

Generating noisy sample with
specified distribution — S102

Generating fake sample of first class from
noise sample using score for noise sample predicted
through score prediction model — S103

End

24

**FIG. 11**

Start

Learning first score prediction model
using first noisy sample generated by
adding noise to sample of first class ⸺S111

Learning second score prediction model
using second noisy sample generated by adding
noise to sample of second class ⸺S112

Performing additional learning on first
score prediction model using specified sample ⸺S113

Generating fake sample of first class
from noise sample using score for noise sample
predicted through first score prediction model ⸺S114

End

**FIG. 12**

S113

Obtaining first score (gradient vector)
and second score (gradient vector) from two score
prediction models using specified sample ——S121

Calculating loss value based on directional similarity
between two scores (gradient vectors) ——S122

Updating weight of first sore prediction
model using calculated loss value ——S123

**FIG. 13**

○ first class sample ☐ second class sample

**FIG. 14**

**FIG. 15**

**FIG. 16**

**REFERENCES CITED IN THE DESCRIPTION**

**Non-patent literature cited in the description**

- **ALEXIA JOLICOEUR-MARTINEAU et al.** *Gotta Go Fast When Generating Data with Score-Based Models*

- **YANG SONG et al.** Improved Techniques for Training Score-Based Generative Models. *ARXIV.ORG*